# EUROPÄISCHE PATENTSCHRIFT

(11) **EP 3 232 224 B1**
(45) Veröffentlichungstag und Bekanntmachung des Hinweises auf die Patenterteilung: **13.06.2018**
(21) Anmeldenummer: 16164822.5
(22) Anmeldetag: 12.04.2016
(51) Int. Cl.: G01S 7/481, G01S 17/10, G01S 17/42, G01S 7/486

(54) **ENTFERNUNGSMESSENDER OPTOELEKTRONISCHER SENSOR UND VERFAHREN ZUR ERFASSUNG UND ABSTANDSBESTIMMUNG VON OBJEKTEN**
DISTANCE-MEASURING OPTO-ELECTRONIC SENSOR AND METHOD FOR DETECTING AND DETERMINING THE DISTANCE FROM OBJECTS
CAPTEUR TELEMETRIQUE OPTOELECTRONIQUE ET PROCEDE DE DETECTION ET DE DETERMINATION DE DISTANCES ENTRE DES OBJETS

(43) Veröffentlichungstag der Anmeldung: 18.10.2017
(73) Patentinhaber: SICK AG, 79183 Waldkirch (DE)
(72) Erfinder: Jachmann, Dr. Fabian, 79102 Freiburg (DE); Franzreb, Herr Simon, 79183 Waldkirch (DE)

(56) Entgegenhaltungen:
- EP-A1- 2 469 297
- US-A1- 2010 045 965

## Beschreibung

Die Erfindung betrifft einen entfernungsmessenden optoelektronischen Sensor und ein Verfahren zur Erfassung und Abstandsbestimmung von Objekten nach dem Oberbegriff von Anspruch 1 beziehungsweise 10.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Durch Bestimmung der Lichtlaufzeit kann dabei der Abstand zu dem angetasteten Objekt gemessen werden.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Die Abstandsmessung in einem Lichtlaufzeitverfahren erfolgt durch ein Pulsverfahren oder alternativ durch eine hier nicht näher betrachtete Phasenmessung. Innerhalb der Pulsverfahren wird weiter unterschieden zwischen Einzelpulsverfahren, die aus jedem wieder empfangenen Sendepuls eine Entfernung messen, und sogenannten Pulsmittelungsverfahren, in denen eine Vielzahl von Einzelmessungen gemeinsam ausgewertet wird. Ein solches Pulsmittelungsverfahren wird beispielsweise in der EP 1 972 961 A1 vorgestellt.

Die Reichweite eines Pulsverfahrens ist nicht nur durch die Energiebilanz, sondern noch zusätzlich durch den sogenannten Eindeutigkeitsbereich beschränkt. Dieser entspricht dem Zeitintervall zwischen zwei Sendepulsen, denn bei einem später empfangenen Puls kann nicht unterschieden werden, ob dies der aktuelle Puls aus geringer Entfernung oder ein vorheriger Puls aus großer Entfernung ist. Deshalb begrenzt die Pulswiederholfrequenz die Reichweite. Es gibt Ansätze, dies durch intelligente Interpolation auszugleichen, aber das muss sich auf Annahmen beispielsweise für Mindestentfernungen oder minimale Objektgrößen stützen und ist deshalb nicht allgemein genug.

Auch die oben schon zitierte EP 1 972 961 A1 diskutiert kurz Pulsechos aus großer Entfernung. Sie werden aber als reine Störgröße angesehen, und es wird eine Störunterdrückung durch künstliche, zufällige Verzögerungen der Einzelpulse eingeführt, die sich wegen der Zufallskomponente im akkumulierten Empfangssignal ausmitteln. Die EP 1 972 961 versucht also nicht, Abstände jenseits des Eindeutigkeitsbereichs zu messen, vielmehr wird sogar die eventuell dafür nutzbare Information gezielt unterdrückt.

Die WO 2012/084298 A1 befasst sich mit einer Weiterentwicklung des Pulsmittelungsverfahrens nach EP 1 972 961 A1 für Laserscanner. Dabei ergibt sich das Problem, dass die zu mittelnden Einzelmessungen während der Scanbewegung erfolgen und somit eine intelligente Zuordnung des resultierenden Abstandswerts zu einem Winkel gefunden werden muss. Deshalb werden nach der WO 2012/084298 A1 mindestens zwei Histogramme aus Einzelmessungen überlappend, also partiell parallel erfasst. Das betrifft demnach die Gruppierung von Einzelmessungen zu einer jeweiligen Gesamtmessung. An der Reichweite der Einzelmessung und folglich der Gesamtmessung ändert sich dadurch nichts.

Die EP 2 469 297 A1 offenbart eine Entfernungsmessung mittels Laserimpulsen. Dabei werden Signalverläufe von Empfangsimpulsen in Zeitfenstern aufgezeichnet und aufsummiert. Die Zeitfenster sind kürzer, als es der maximalen Messentfernung enspricht. Sie werden durch Wahl des Anfangszeitpunktes in einen jeweiligen Eindeutigkeitsbereich verschoben. Außerdem wird die Abfolge der Sendezeitpunkte mit einem Phasenjitter versehen. So kann durch Anpassung der zeitlichen Lage der Zeitfenster an die Sendezeitpunkte dafür gesorgt werden, dass sich die Messpulse im Eindeutigkeitsbereich konstruktiv aufsummieren. Unerwünschte sogenannte Geisterechos von Objekten außerhalb des jeweiligen Eindeutigkeitsbereichs liegen dagegen nicht-kongruent und ergeben daher ein viel schwächeres Summensignal, das durch entsprechende Schwellenwahl unterdrückt werden kann.

Aus der US 2010/0045965 A1 ist ein Lidar-System bekannt, das eine pseudo-zufällige Sendepulssequenz verwendet. Die Sendepulssequenz erzeugt eine entsprechende Empfangspulssequenz, so dass durch Korrelation der Empfangspulse mit der bekannten Sequenz unterschieden werden kann, ob ein Puls im Empfangssignal tatsächlich ein Echo von einem Objekt ist oder nur ein Störpuls. Es ist denkbar, dass Teile der Pulse einer Sendepulssequenz noch ausgesandt werden, während schon Empfangspulse empfangen werden.

Es ist deshalb Aufgabe der Erfindung, die Abstandsmessung durch ein Pulslaufzeitverfahren zu verbessern.

Diese Aufgabe wird durch einen entfernungsmessenden optoelektronischen Sensor und ein Verfahren zur Erfassung und Abstandsbestimmung von Objekten nach Anspruch 1 beziehungsweise 10 gelöst. Der erfindungsgemäße Sensor bestimmt zunächst gattungsgemäß Abstände durch Aussenden von Sendelichtpulsen, deren Empfang nach Reflexion oder Remission an einem Objekt und Auswertung der Pulslaufzeit aus einem Empfangssignal, das aus dem wieder empfangenen Sendelichtpuls erzeugt wird. Die Erfindung geht nun von dem Grundgedanken aus, für das Erfassen des Empfangssignals zwei Abtastungsspeicher vorzusehen, die einen vergrößerten Eindeutigkeitsbereich aufweisen und einander abwechseln. Es entstehen teilüberlappende Aufzeichnungsbereiche, die jeweils länger sind als das Zeitintervall zwischen zwei aufeinanderfolgenden Sendelichtpulsen. Die alternierende Zuständigkeit der Abtastungsspeicher bedeutet anders ausgedrückt, dass der erste Abtastungsspeicher das Empfangssignal noch über den Sendezeitpunkt des nachfolgenden Sendelichtpulses hinaus aufzeichnet. So werden auch noch späte Echos von weit entfernten Objekten erfasst.

Währenddessen ist der zweite Abtastungsspeicher bereits aktiv, um mit dem neuen Sendelichtpuls frühe Echos eines nahen Objekts zu erfassen.

Die Erfindung hat den Vorteil, dass eine höhere Reichweite erzielt wird, ohne dabei die Ansprechzeit beziehungsweise Messwiederholrate zu beeinträchtigen. Die Kopplung von Pulswiederholfrequenz und Reichweite wird aufgehoben und eine Messung über den Eindeutigkeitsbereich hinaus ermöglicht. Alternativ kann auf zumindest einen Teil des Reichweitengewinns verzichtet und dafür die Pulswiederholfrequenz angehoben werden. Zusätzliche Abtastungsspeicher mit entsprechender Aufgabenverteilung für noch mehr Reichweite beziehungsweise Pulswiederholfrequenz sind denkbar.

Zum besseren Verständnis der erfindungsgemäßen Vorteile sei an dieser Stelle wiederholt, dass herkömmlich der Aufzeichnungsbereich höchstens dem durch die Pulswiederholfrequenz vorgegebenen Eindeutigkeitsbereich entsprechen kann. Anschließend muss zur Vermeidung von Messlücken das Empfangssignal zu dem neuen Sendelichtpuls erfasst werden. Reichweite und Pulswiederholfrequenz sind deshalb aneinander gekoppelt. Die beiden erfindungsgemäßen Abtastungsspeicher dürfen auch nicht mit den beiden Histogrammspeichern der einleitend erwähnten WO 2012/084298 A1 verwechselt werden. Dort wird nämlich das Empfangssignal ebenfalls strikt nur innerhalb des Eindeutigkeitsbereichs erfasst. Die beiden Histogrammspeicher dienen dazu, Einzelmessungen zugleich verschiedenen Gruppen zuordnen zu können.

Die Steuer- und Auswerteeinheit ist vorzugsweise dafür ausgebildet, Sendelichtpulse wiederholt mit einer Phasencodierung auszusenden, wobei erster Abtastungsspeicher und zweiter Abtastungsspeicher entsprechend der Phasencodierung aufeinanderfolgender Sendelichtpulse unterschiedlich synchronisiert sind. Die Phasencodierung dient unter anderem dazu, dass regelmäßige Störer sich zu unterschiedlichen Zeitpunkten auf das Empfangssignal niederschlagen. Auch ein remittierendes Objekt jenseits des Eindeutigkeitsbereichs ist in gewisser Weise ein solcher Störer. Die Synchronisation bewirkt, dass ein fernes Objekt in dem zuständigen Abtastungsspeicher als Messeffekt und in dem nicht zuständigen Abtastungsspeicher als Störung registriert wird. Insbesondere synchronisieren sich die Abtastungsspeicher alternierend auf die Phasencodierung aufeinanderfolgender Sendelichtpulse.

Die Steuer- und Auswertungseinheit ist bevorzugt dafür ausgebildet, eine Vielzahl aufeinanderfolgender Sendelichtpulse auszusenden, die in dem ersten Abtastungsspeicher und dem zweiten Abtastungsspeicher erfassten Empfangssignale in einem Histogramm zu akkumulieren und den Empfangszeitpunkt aus dem Histogramm zu bestimmen. Diese Ausführungsform arbeitet also mit einem Mehrpulsverfahren. Dabei tritt das Problem des begrenzten Eindeutigkeitsbereichs wegen der zahlreichen Sendelichtpulse besonders deutlich zu Tage. Erfindungsgemäß ist aber der Zusammenhang zwischen Eindeutigkeitsbereich und Reichweite durchbrochen. Besonders wirkungsvoll ist ein Mehrpulsverfahren bei Synchronisation der Abtastungsspeicher auf eine Phasencodierung, wie im vorigen Absatz erläutert. Das Echo von einem fernen Objekt ist dann nämlich in dem einen Abtastungsspeicher synchronisiert und baut sich dort durch Akkumulieren auf, während es in dem anderen nicht synchronisierten Abtastungsspeicher, wo es fehlerhaft als nahes Objekt erkannt würde, durch die Phasencodierung verschmiert wird und sich dadurch wie gewünscht als Störgröße ausmittelt.

Die Steuer- und Auswertungseinheit ist bevorzugt dafür ausgebildet, Empfangssignale in den Abtastungsspeichern zu akkumulieren. Die Abtastungsspeicher erfassen also nicht nur das aktuelle Empfangssignal, sondern eine Historie mehrerer Empfangssignale, beispielsweise durch Aufaddieren der jeweiligen Amplitude auf den bisherigen Speicherinhalt. Um dann das Histogramm zu erhalten, werden dann vorzugsweise noch die Daten aus den Abtastungsspeichern zu einem Histogramm zusammengefügt. Alternativ zu einer Akkumulation direkt in den Abtastungsspeichern gibt es mindestens einen zusätzlichen Histogrammspeicher, in dem akkumuliert wird, typischerweise alternierend aus den beiden Abtastungsspeichern.

Vorzugsweise ist mindestens ein A/D-Wandler vorgesehen, um Empfangssignale zum Speichern in den Abtastungsspeichern zu digitalisieren. Dabei können die Empfangssignale als solche, also deren mit der Bitbreite des A/D-Wandlers entstandene digitale Werte erfasst werden. Besonders bevorzugt ist der A/D-Wandler nur ein Binarisierer. Das ist ein besonders einfaches Bauelement, und das Akkumulieren von Histogrammen kann durch einfache Zähler erfolgen. Alternativ erfolgt nicht nur eine Binarisierung, jedoch auch keine vollständige Mehrbitabtastung, sondern es werden mit zwei symmetrisch angeordneten Schwellen nur die Amplitudenzustände -1, 0, +1 oder allgemein eine ungerade Anzahl Amplitudenzustände erfasst. Für nähere Erläuterungen zu dieser Alternative wird auf die EP 2 942 645 A1 verwiesen.

Die Abtastungsspeicher und die Steuer- und Auswertungseinheit sind bevorzugt auf einem gemeinsamen digitalen Logikbaustein implementiert, insbesondere einem FPGA (Field Programmable Gate Array). Das führt zu äußerst geringen Herstellkosten und einer besonders kompakten Bauweise. Auch ein A/D-Wandler kann auf dem digitalen Baustein integriert werden, insbesondere über Komparatoren an dessen Eingängen

Dem Lichtempfänger ist bevorzugt ein Filter nachgeordnet, um Empfangslichtpulse zu einem bipolaren Signal umzuwandeln. Lichtsignale sind stets unipolar, weil Lichteinfall in dem Lichtempfänger nur ein positives Signal erzeugen kann. Durch einen nachgeschalteten Filter, der durch den Lichteinfall in eine Schwingung versetzt wird, beispielsweise einen Bandpassfilter oder ein Differenzierglied, entsteht ein bipolares Signal, in dem sich durch digitale Signalverarbeitung nach der A/D-Wandlung ein Empfangszeitpunkt anhand eines Nulldurchgangs bestimmen lässt. Dies ist wesentlich präziser als die Bestimmung der Lage eines beispielsweise positiven Peaks, weil der Nulldurchgang nicht von der Signalstärke und damit Sende- und Umgebungsparametern abhängt. Außerdem wird ein Echo von einem fernen Objekt, das in dem nicht zuständigen Abtastungsspeicher im Nahbereich erfasst wird, als Bipolarsignal durch Phasencodierung und entsprechende Synchronisation besonders wirksam unterdrückt.

Der Sensor ist bevorzugt als Laserscanner mit einer beweglichen Ablenkeinheit zur periodischen Ablenkung der Sendelichtpulse in den Überwachungsbereich ausgebildet. Ein Laserscanner ermöglicht eine Flächenüberwachung mit einem großen erfassten Überwachungsbereich, der durch die erfindungsgemäße Reichweitenerhöhung noch erweitert wird. Ein Laserscanner weist bevorzugt eine Winkelmesseinheit zur Erzeugung von Winkelpositionssignalen in Abhängigkeit von einer Winkelstellung der Ablenkeinheit auf, um Objektpositionen oder Konturen zweidimensional zu erfassen. Eine periodische Ablenkung in einer weiteren Achse ermöglicht sogar eine 3D-Erfassung.

Der Sensor weist bevorzugt einen Sicherheitsausgang auf, wobei die Steuer- und Auswertungseinheit dafür ausgebildet ist, unzulässige Eingriffe in Schutzfelder innerhalb des Überwachungsbereichs zu erkennen und daraufhin ein sicherheitsgerichtetes Abschaltsignal an dem Sicherheitsausgang auszugeben. Damit kann der Sensor in sicherheitstechnischen Anwendungen eingesetzt werden. Beispiele sind Sicherheitsscanner oder sichere entfernungsmessende Lichtgitter.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch einen Laserscanner;
- Fig. 2: eine schematische Darstellung der alternierenden teilüberlappenden Erfassung von Empfangssignalen in zwei Abtastungsspeichern;
- Fig. 3: ein beispielhafter Verlauf eines Empfangssignals innerhalb des Eindeutigkeitsbereichs;
- Fig. 4: ein beispielhafter Verlauf eines Empfangssignals bei erfindungsgemäßer Erfassung in zwei Abtastungsspeichern für ein fernes Objekt;
- Fig. 5: ein beispielhafter Verlauf eines Empfangssignals bei erfindungsgemäßer Erfassung in zwei Abtastungsspeichern für ein nahes Objekt;
- Fig. 6: eine Blockdarstellung einer analogen Signalvorverarbeitung und einer digitalen Auswertung zur Entfernungsmessung mit einem Lichtlaufzeitverfahren; und
- Fig. 7: eine Darstellung der Signale in verschiedenen Verarbeitungsstufen der Vorverarbeitung und Auswertung gemäß Figur 7.

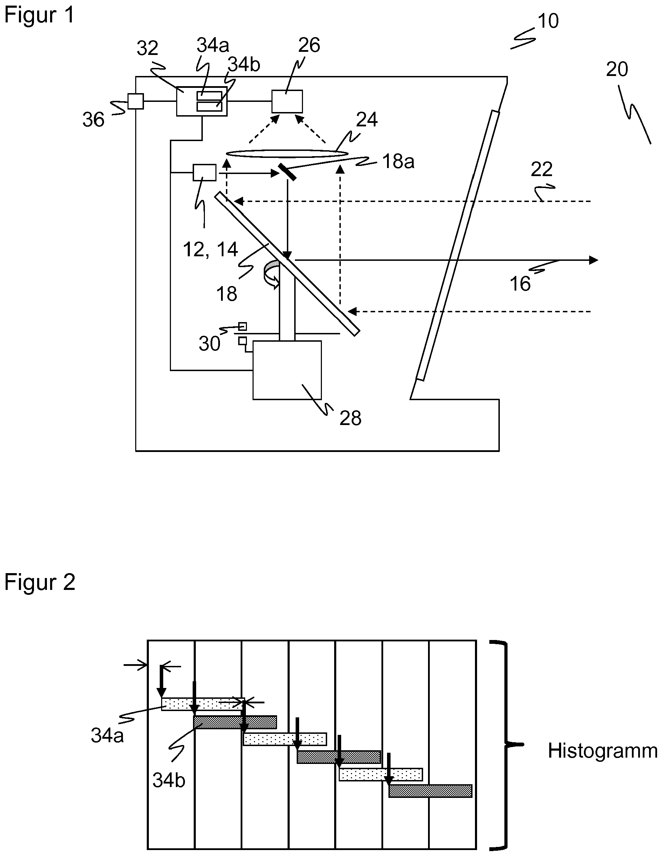

Figur 1 zeigt eine schematische Schnittdarstellung durch einen Laserscanner 10. Der optische und konstruktive Aufbau des Laserscanners 10 ist nur als Beispiel zu verstehen. Ebenso ist ein Laserscanner 10 ein bevorzugtes Beispiel eines erfindungsgemäßen Sensors, die Erfindung jedoch darauf nicht beschränkt, sondern etwa auch für einstrahlige entfernungsmessender Taster einsetzbar.

Ein Lichtsender 12, beispielsweise mit einer Laserlichtquelle, erzeugt mit Hilfe einer Sendeoptik 14 einen Sendelichtstrahl 16 mit Sendelichtpulsen. Der Sendelichtstrahl 16 wird mittels einer Ablenkeinheit 18a, 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD).

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Auswertungseinheit 32 ist mit dem Lichtsender 12, dem Lichtempfänger 26, dem Motor 28 und der Winkelmesseinheit 30 verbunden. In zwei Abtastungsspeichern 34a-b, die Teil der Auswertungseinheit 32 sein können oder nicht, werden in einer anhand der Figuren 2 bis 5 noch genauer zu erläuternden Weise digitalisierte Empfangssignale des Lichtempfängers 26 gespeichert. Die Auswertungseinheit 32 ermittelt anhand der Empfangssignale die Lichtlaufzeit zwischen Aussenden des Sendelichtstrahls 16 und Empfang von remittiertem Licht 22, um unter Verwendung der Lichtgeschwindigkeit auf die Entfernung eines angetasteten Objektes von dem Laserscanner 10 zu schließen. Die jeweilige Winkelstellung, unter welcher dabei der Sendelichtstrahl 16 ausgesandt wurde, ist der Auswertungseinheit von der Winkelmesseinheit 30 bekannt.

Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 36 übertragen oder am Laserscanner 10 angezeigt werden. Die Schnittstelle 36 kann umgekehrt auch als Parametrierschnittstelle dienen, über welche der Auswertungseinheit 32 Daten eingespielt werden können. Alternativ kann eine eigene Parametrierschnittstelle vorgesehen sein. Bei Anwendungen in der Sicherheitstechnik kann die Schnittstelle 36 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Figur 2 ist eine schematische Darstellung zur Erläuterung einer alternierenden teilüberlappenden Erfassung von Empfangssignalen in den beiden Abtastungsspeichern 34a-b. Dabei symbolisiert die Länge der Balken in Figur 2 das Zeitintervall, innerhalb dessen das Empfangssignal in dem jeweiligen Abtastungsspeicher 34a-b aufgezeichnet wird. Die Striche des regelmäßigen senkrechten Rasters stellen eine regelmäßige Sendepulsfrequenz dar. Die tatsächlichen Sendezeitpunkte, zu denen nacheinander Sendelichtpulse mit dem Sendelichtstrahl 16 ausgesandt werden, sind dagegen gemäß einer vorzugsweise pseudozufälligen Phasencodierung verschoben und somit nicht zeitlich äquidistant, wie auch nochmals durch horizontale Pfeile gezeigt. Die Aufzeichnungsbereiche der Abtastungsspeicher sind alternierend auf jeweils jeden zweiten Sendelichtpuls synchronisiert, unter Berücksichtigung der Phasencodierung. Außerdem sind die Aufzeichnungsbereiche gegenüber dem Eindeutigkeitsbereich verlängert, welcher dem Abstand zweier senkrechter Striche und damit der Widerholungsperiode der Sendelichtpulse entspricht. Die maximal mögliche Verlängerung und damit Reichweitenerhöhung ist das Doppelte des ursprünglichen Eindeutigkeitsbereichs ohne Berücksichtigung der Phasencodierung, weil dann der jeweilige Abtastungsspeicher 34a-b wieder für einen späteren Sendelichtpuls zuständig wird. Diese Beschränkung kann jedoch bei Bedarf durch zusätzliche Abtastungsspeicher aufgehoben werden.

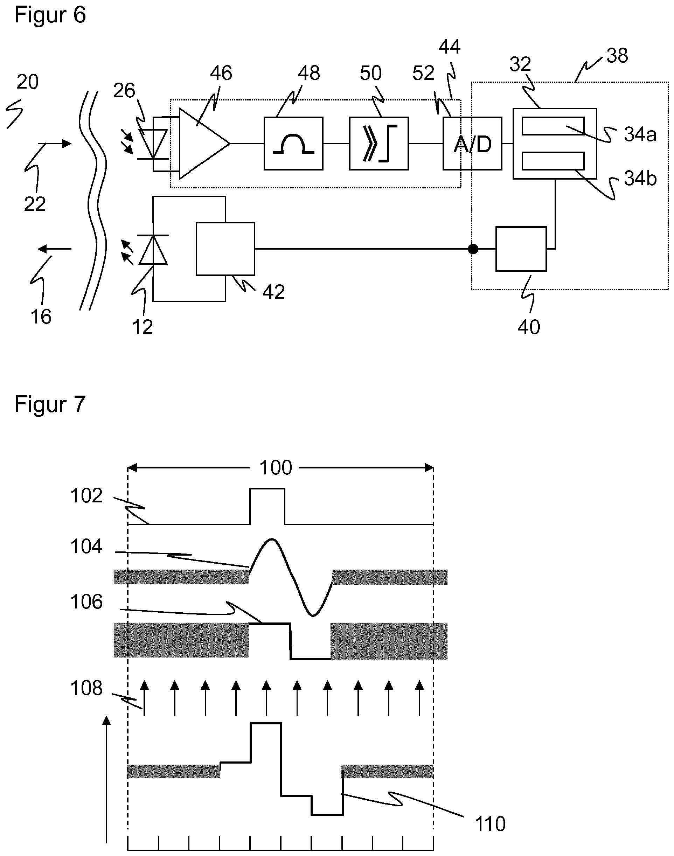

Die Empfangssignale in den Abtastungsspeichern 34a-b können direkt nach Erfassung auf eine Lichtlaufzeit hin ausgewertet werden. Vorzugsweise wird aber eine Vielzahl von Empfangssignalen aufaddiert oder gemittelt und erst das so entstehende Histogramm ausgewertet. Das ergibt eine deutliche Verbesserung des Signal-zu-Rausch-Verhältnisses. Eine mögliche Histogrammauswertung wird weiter unten noch abschließend unter Bezugnahme auf die Figuren 6 und 7 erläutert.

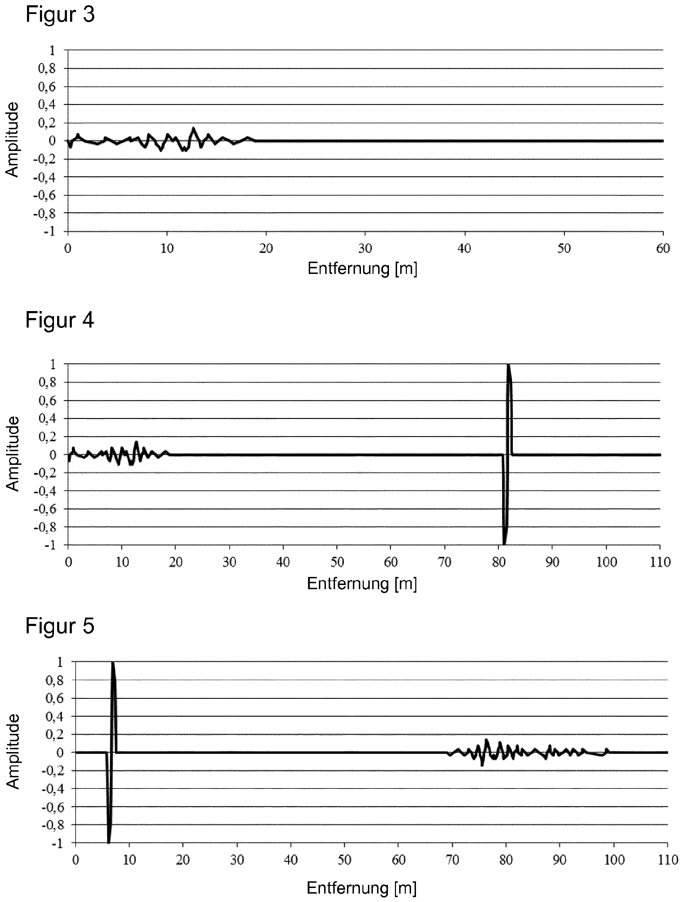

Die Effekte der Erfassung von Empfangssignalen in zwei Auswertungsspeichern 34a-b gemäß Figur 2 werden nun anhand der Figuren 3 bis 5 illustriert. Dabei werden zur Veranschaulichung konkrete Zahlenwerte verwendet, die natürlich rein beispielhaft zu verstehen sind.

Figur 3 zeigt zunächst zum Vergleich den Amplitudenverlauf eines Empfangssignals in Abhängigkeit von der Entfernung, die ihrerseits proportional zur Lichtlaufzeit ist, für ein herkömmliches Verfahren mit nur einem Abtastungsspeicher, dessen Aufzeichnungsbereich höchstens so groß wie der des Eindeutigkeitsbereichs ausgelegt ist. Bei einer Pulswiederholfrequenz der Sendelichtpulse von 2 MHz beträgt der Eindeutigkeitsbereich ca. 75 m, denn das Licht braucht für diese Strecke auf dem Hin- und Rückweg in etwa 1/(2 MHz). Kommt noch eine Phasencodierung mit einem Phasenhub von 10% hinzu, so reduziert sich der Eindeutigkeitsbereich entsprechend auf etwa 67,5 m.

Ein Objekt in größerer Entfernung, hier 80 m, wird nicht mehr innerhalb des Eindeutigkeitsbereichs erfasst. Ein Echo von diesem fernen Objekt erreicht den Laserscanner 10 erst, nachdem der Abtastungsspeicher bereits auf den nächsten Sendelichtpuls synchronisiert ist. Bei Mittelung von Empfangssignalen zu mehreren Sendelichtpulsen wirkt sich diese mangelnde Synchronisierung oder falsche Phasencodierung so aus, dass sich das Echo des fernen Objekts nicht zu einem auswertbaren Peak aufsummiert, d. h. konstruktiv überlagert, sondern wegen der Verschmierung entsprechend der Phasencodierung ausmittelt. Deshalb ist in Figur 3 auch nur eine Art Störsignal im Anfangsbereich zu erkennen, nämlich das soeben erläuterte durch Mittelung gedämpfte Übersprechen der jeweils vorhergehenden Einzelmessung.

Die Phasencodierung (Dithering) sorgt also für Robustheit gegenüber einer Fehldetektion eines Objekts im Nahbereich, das tatsächlich gar nicht existiert. Allerdings wird dadurch auch jegliche Messinformation über das Objekt in 80 m Entfernung mit unterdrückt. Der herkömmliche ausgelegte einzige Abtastungsspeicher kann keine Messinformation über den Eindeutigkeitsbereich hinaus erfassen.

Figur 4 zeigt nun einen entsprechenden Amplitudenverlauf des Empfangssignals bei erfindungsgemäßer Verwendung zweier Abtastungsspeicher 34a-b gemäß Figur 2. Wenn das Echo des fernen Objekts aus 80 m empfangen wird, ist der jeweils zuständige Abtastungsspeicher 34a-b immer noch auf den zugehörigen Sendelichtpuls synchronisiert. Die Aufzeichnung erfolgt über den Eindeutigkeitsbereich hinaus. Wegen der korrekten Synchronisierung entsteht auch nach Mittelung ein ausgeprägter Peak für das Objekt bei 80 m. Die Messreichweite ist nicht mehr auf den Eindeutigkeitsbereich beschränkt.

Während der eine Abtastungsspeicher 34a-b noch auf Echos aus jenseits 75 m Abstand wartet, beginnt der andere Abtastungsspeicher 34b-a bereits erneut damit, synchronisiert auf den nächsten Sendelichtpuls dessen Echos ab 0 m zu erfassen. Das Objekt bei 80 m wird auch im anderen Abtastungsspeicher 34b-a erfasst, dort aber im Nahbereich, d. h. bei 80 m (tatsächlicher Abstand) - 75 m (Eindeutigkeitsbereich) = 5 m (scheinbarer Abstand). Da aber der andere Abtastungsspeicher 34b-a auf den nachfolgenden Sendelichtpuls synchronisiert ist, weist er einen veränderlichen Phasenversatz entsprechend der Phasencodierung auf. Deshalb wird ähnlich wie in der Situation der Figur 3 die scheinbare Objekterfassung im Nahbereich verschmiert und so durch Mittelung unterdrückt, was in Figur 4 auch deutlich erkennbar ist.

Figur 5 illustriert noch den umgekehrten Fall eines nahen Objekts im Abstand 5 m. Dieses nahe Echo wird in dem zuständigen, d. h. auf den zugehörigen Sendelichtpuls synchronisierten Abtastungsspeicher 34a-b gleich am Anfang noch innerhalb des Eindeutigkeitsbereichs als ausgeprägter Peak erfasst. In dem anderen Abtastungsspeicher 34b-a führt das ganz analog den Ausführungen zu Figur 4 zu einem Übersprechen bei dem zugehörigen Abstandswert modulo Eindeutigkeitsbereich, d. h. hier bei 80 m, das wegen der Phasencodierung und Mittelung stark unterdrückt ist.

Anhand der Figuren 6 und 7 wird abschließend ein beispielhaftes Mehrpulsverfahren näher erläutert, das prinzipiell für eindimensionale Entfernungstaster aus der einleitend genannten EP 1 972 961 A1 bekannt ist, weshalb hierauf für ergänzende Erklärungen verwiesen wird. Das Prinzip der Reichweitenerhöhung funktioniert hier besonders gut, die Erfindung ist aber nicht auf dieses spezielle Mehrpulsverfahren und insgesamt nicht auf ein Mehrpulsverfahren beschränkt.

Wie in Figur 6 gezeigt, ist die Auswertungseinheit 32 mit den Abtastungsspeichern 34a-b vorzugsweise auf einem digitalen Baustein 38 implementiert, beispielsweise einem FPGA (Field Programmable Gate Array). Auf einem Sendepfad veranlasst die Auswertungseinheit 32 über eine Verzögerungseinrichtung 40 und eine Lasertreiberschaltung 42 den Lichtsender 12 zum Aussenden von Sendelichtpulsen zu wohldefinierten Zeitpunkten. Die Verzögerungseinheit 40 kann durch Register, Zähler und dergleichen des FPGA realisiert sein.

Das remittierte Licht 22 eines Einzellichtpulses wird von dem Lichtempfänger 26 in einen Empfangspuls gewandelt und über einen analogen Vorverarbeiter 44 mit einem Vorverstärker 46, einem Filter 48 und einem Begrenzungsverstärker 50 sowie über einen A/D-Wandler 52 der Auswertungseinheit 32 zugeführt. Vorverstärker 46 und Filter 48 können auch vertauscht angeordnet sein.

Die dabei in den verschiedenen Zwischenstufen entstehenden Signale zeigt Figur 7. Der Lichtsender 12 erzeugt in jeder Messperiode 100 jeweils einen Sendelichtpuls. Die Phasencodierung ist in Figur 7 nicht dargestellt. Der Sendelichtpuls wird in dem Überwachungsbereich 20 reflektiert oder remittiert und dann in dem Lichtempfänger 26 in einen elektrischen Empfangspuls 102 umgewandelt und in dem Transimpedanzverstärker 46 verstärkt. Der Empfangspuls 102 ist idealisiert dargestellt, unter realistischen Bedingungen kämen Rauschanteile und Formverzerrungen hinzu.

Der Empfangspuls 102 ist aufgrund der Natur des Lichtes immer ein unipolares Signal. In dem Filter 48, beispielsweise einem Bandpassfilter, wird daraus ein bipolares Signal 104, von dem nur die beiden ersten Schwingungen gezeigt sind. Neben dem eigentlichen bipolaren Signal 104 symbolisieren graue Rechtecke einen Rauschpegel. In dem Begrenzungsverstärker 50 wird das bipolare Signal 104 bis in die Sättigung hinein verstärkt und abgeschnitten, so dass das eigentliche Signal zu einer Rechteckflanke 106 und der durch graue Rechtecke dargestellte Rauschpegel in seiner Amplitude über den gesamten Dynamikbereich gedehnt wird.

Die Rechteckflanke 106 wird in dem insbesondere als Binarisierer ausgebildeten A/D-Wandler 52 abgetastet. Jeder Stützpunkt der Abtastung wird durch einen Pfeil 108 symbolisiert. Die entstehende Bitfolge wird in der Auswertungseinheit 32 verwendet, um ein Histogramm 110 zu bilden. Dafür ist für jedes Bin ein Akkumulator vorgesehen, der nur bei einem zugehörigen Bitwert "1" heraufgezählt wird. Bei idealen, unverrauschten Signalen würde in diesem Histogramm nur dasjenige Bin gefüllt, über dem die Rechteckflanke 106 liegt. Der von dem Begrenzungsverstärker 50 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 110 über n Messperioden 100 gebildet, so sind die Bins durch das Rauschen ungefähr mit dem Wert n/2 gefüllt, wobei statistische Schwankungen hinzukommen. Dieser Wert n/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Den dazwischenliegenden Nulldurchgang detektiert die Auswertungseinheit 32, um den Empfangszeitpunkt unabhängig von dem Signalpegel zu bestimmen.

Durch die statistische Auswertung einer Vielzahl von Einzelmessungen wird das Signal-Rausch-Verhältnis so weit angehoben, dass auch bei gestörten Umgebungsbedingungen robuste Entfernungsmessungen möglich sind. Dies gilt auch dann, wenn ein einzelner verstärkter Empfangspuls 102 so stark verrauscht ist, dass keinerlei Unterschiede zwischen Nutzsignal und Rauschen erkennbar sind.

## Patentansprüche

1. Entfernungsmessender optoelektronischer Sensor (10) zur Erfassung und Abstandsbestimmung von Objekten in einem Überwachungsbereich (20), der einen Lichtsender (12) zum Aussenden eines Sendelichtpulses (16) in den Überwachungsbereich (20), einen Lichtempfänger (26) zum Erzeugen eines Empfangssignals aus dem von Objekten in dem Überwachungsbereich (20) remittierten oder reflektierten Sendelichtpuls (22), einen ersten Abtastungsspeicher (34a) und mindestens einen zweiten Abtastungsspeicher (34b) mit einer Vielzahl von Speicherplätzen, in denen jeweils ein Abschnitt des Empfangssignals speicherbar ist, und eine Steuer- und Auswertungseinheit (32) aufweist, die dafür ausgebildet ist, aus dem Empfangssignal einen Empfangszeitpunkt und daraus mittels eines Lichtlaufzeitverfahrens den Abstand des Objekts zu bestimmen,
**dadurch gekennzeichnet, dass** der erste Abtastungsspeicher (34a) und der zweite Abtastungsspeicher (34b) alternierende teilüberlappende Aufzeichnungsbereiche aufweisen und jeweils zum Aufzeichnen eines Empfangssignals über eine längere Dauer ausgebildet sind als ein Zeitintervall zwischen zwei aufeinanderfolgenden Sendelichtpulsen, so dass der erste Abtastungsspeicher (34a) das Empfangssignal noch über den Sendezeitpunkt des nachfolgenden Sendelichtpulses (16) hinaus aufzeichnet, um auch noch späte Echos von weit entfernten Objekten zu erfassen und der zweite Abtastungsspeicher (34b) währenddessen bereits aktiv ist, um mit dem neuen Sendelichtpuls frühe Echos eines nahen Objekts zu erfassen.

2. Sensor (10) nach Anspruch 1,
wobei die Steuer- und Auswerteeinheit (32) dafür ausgebildet ist, Sendelichtpulse (16) wiederholt mit einer Phasencodierung auszusenden, und wobei erster Abtastungsspeicher (34a) und zweiter Abtastungsspeicher (34b) entsprechend der Phasencodierung aufeinanderfolgender Sendelichtpulse (16) unterschiedlich synchronisiert sind.

3. Sensor (10) nach Anspruch 1 oder 2,
wobei die Steuer- und Auswertungseinheit (32) dafür ausgebildet ist, eine Vielzahl aufeinanderfolgender Sendelichtpulse (16) auszusenden, die in dem ersten Abtastungsspeicher (34a) und dem zweiten Abtastungsspeicher (34b) erfassten Empfangssignale in einem Histogramm zu akkumulieren und den Empfangszeitpunkt aus dem Histogramm zu bestimmen.

4. Sensor (10) nach Anspruch 3,
wobei die Steuer- und Auswertungseinheit (32) dafür ausgebildet ist, Empfangssignale in den Abtastungsspeichern (34a-b) zu akkumulieren.

5. Sensor (10) nach einem der vorhergehenden Ansprüche,
wobei mindestens ein A/D-Wandler (52) vorgesehen ist, um Empfangssignale zum Speichern in den Abtastungsspeichern (34a-b) zu digitalisieren.

6. Sensor (10) nach einem der vorhergehenden Ansprüche,
wobei die Abtastungsspeicher (34a-b) und die Steuer- und Auswertungseinheit (32) auf einem gemeinsamen digitalen Logikbaustein (38) implementiert sind, insbesondere einem FPGA.

7. Sensor (10) nach einem der vorhergehenden Ansprüche,
wobei dem Lichtempfänger (26) ein Filter (48) nachgeordnet ist, um Empfangslichtpulse (102) zu einem bipolaren Signal (104) umzuwandeln.

8. Sensor (10) nach einem der vorhergehenden Ansprüche,
der als Laserscanner mit einer beweglichen Ablenkeinheit (18) zur periodischen Ablenkung der Sendelichtpulse (16) in den Überwachungsbereich (20) ausgebildet ist.

9. Sensor (10) nach einem der vorhergehenden Ansprüche,
der einen Sicherheitsausgang (36) aufweist und wobei die Steuer- und Auswertungseinheit (32) dafür ausgebildet ist, unzulässige Eingriffe in Schutzfelder innerhalb des Überwachungsbereichs (20) zu erkennen und daraufhin ein sicherheitsgerichtetes Abschaltsignal an dem Sicherheitsausgang (36) auszugeben.

10. Verfahren zur Erfassung und Abstandsbestimmung von Objekten in einem Überwachungsbereich (20), bei dem Sendelichtpulse (16) in den Überwachungsbereich (20) ausgesandt werden, aus den von Objekten in dem Überwachungsbereich (20) remittierten oder reflektierten Sendelichtpulsen (22) jeweils ein Empfangssignal erzeugt, in einem ersten Abtastungsspeicher (34a) und mindestens einem zweiten Abtastungsspeicher mit einer Vielzahl von Speicherplätzen jeweils ein Abschnitt des Empfangssignals gespeichert und das Empfangssignal ausgewertet wird, um einen Empfangszeitpunkt und daraus mittels eines Lichtlaufzeitverfahrens den Abstand des Objekts zu bestimmen,
**dadurch gekennzeichnet,**
**dass** der erste Abtastungsspeicher (34a) und der zweite Abtastungsspeicher (34b) alternierende teilüberlappende Aufzeichnungsbereiche aufweisen und jeweils ein Empfangssignal über eine längere Dauer aufzeichnen, als ein Zeitintervall zwischen zwei aufeinanderfolgenden Sendelichtpulsen, so dass der erste Abtastungsspeicher (34a) das Empfangssignal noch über den Sendezeitpunkt des nachfolgenden Sendelichtpulses (16) hinaus aufzeichnet, um auch noch späte Echos von weit entfernten Objekten zu erfassen und der zweite Abtastungsspeicher (34b) währenddessen bereits aktiv ist, um mit dem neuen Sendelichtpuls frühe Echos eines nahen Objekts zu erfassen.

11. Verfahren nach Anspruch 10,
wobei die Sendelichtpulse (16) nacheinander mit einer Phasencodierung ausgesandt werden, und wobei erster Abtastungsspeicher (34a) und zweiter Abtastungsspeicher (34b) alternierend auf die Phasencodierung aufeinanderfolgender Sendelichtpulse (16) synchronisiert sind.

12. Verfahren nach Anspruch 10 oder 11,
wobei eine Vielzahl aufeinanderfolgender Sendelichtpulse (16) ausgesandt, die in dem ersten Abtastungsspeicher (34a) und dem zweiten Abtastungsspeicher (34b) erfassten Empfangssignale in einem Histogramm akkumuliert werden und der Empfangszeitpunkt aus dem Histogramm bestimmt wird.

13. Verfahren nach Anspruch 12,
wobei die Empfangssignale zumindest teilweise in den Abtastungsspeichern (34a-b) akkumuliert werden.

14. Verfahren nach einem der Ansprüche 10 bis 13,
wobei die Sendelichtpulse (16) mit Hilfe einer beweglichen Ablenkeinheit (18) periodisch in den Überwachungsbereich (20) abgelenkt werden, um einen vergrößerten Überwachungsbereich (20) abzutasten.

15. Verfahren nach einem der Ansprüche 10 bis 14,
wobei unzulässige Eingriffe in Schutzfelder innerhalb des Überwachungsbereichs (20) erkannt werden und daraufhin ein sicherheitsgerichtetes Abschaltsignal ausgegeben wird.

## Claims

1. A distance-measuring optoelectronic sensor (10) for detection and distance-determination of objects in a monitoring zone (20), the sensor (10) comprising a light transmitter (12) for transmitting a transmission light pulse (16) into the monitoring area (20), a light receiver (26) for generating a reception signal from the light pulse (22) remitted or reflected by objects in the monitoring area (20), a first sampling memory (34a) and at least a second sampling memory (34b) having a plurality of memory cells each for storing a section of the reception signal, and a control and evaluation unit (32) configured to determine a reception point in time from the reception signal and, from that, the distance of the object by means of a light time of flight method,
**characterized in that** the first sampling memory (34a) and the second sampling memory (34b) have alternately partially overlapping recording regions and are each configured to record a reception signal for a longer duration than a time interval between two successive transmission light pulses so that the first sampling memory (34a) records the reception signal beyond the transmission point in time of the subsequent transmission light pulse (16) in order to also detect late echoes from far objects while the second sampling memory (34b) already is active in order to detect early echoes from a near object by means of the new transmission light pulse.

2. The sensor (10) according to claim 1,
wherein the control and evaluation unit (32) is configured to transmit transmission light pulses (16) repeatedly with a phase coding, and wherein first sampling memory (34a) and second sampling memory (34b) are differently synchronized according to the phase coding of successive transmission light pulses (16).

3. The sensor (10) according to claim 1 or 2,
wherein the control and evaluation unit (32) is configured to transmit a plurality of successive transmission light pulses (16), to accumulate the reception signals recorded in the first sampling memory (34a) and the second memory (34b) in a histogram, and to determine the reception point in time from the histogram.

4. The sensor (10) according to claim 3,
wherein the control and evaluation unit (32) is configured to accumulate reception signals in the sampling memories (34a-b).

5. The sensor (10) according to any of the preceding claims,
wherein at least one A/D converter (52) is provided in order to digitize reception signals for storing in the sampling memories (34a-b).

6. The sensor (10) according to any of the preceding claims,
wherein the sampling memories (34a-b) and the control and evaluation unit (32) are implemented on a common digital logic module, in particular an FPGA.

7. The sensor (10) according to any of the preceding claims,
wherein a filter (48) for converting the reception light pulse (102) into a bipolar signal (104) is arranged downstream the light receiver (26).

8. The sensor (10) according to any of the preceding claims,
which is configured as a laser scanner having a movable deflection unit (18) for periodically deflecting the transmission light pulses (16) in the monitoring area (20).

9. The sensor (10) according to any of the preceding claims,
comprising a safety output (36), and wherein the control and evaluation unit (32) is configured to detect an inadmissible intrusion into a protection field within the monitoring area (20) and to output a safety-related shut down signal at the safety output (36) in that case.

10. A method for detection and distance-determination of objects in a monitoring area (20), wherein transmission light pulses (16) are transmitted into the monitoring area (20), a respective reception signal is generated from the light pulses (22) remitted or reflected by objects in the monitoring area (20), sections of the reception signal are stored in a first sampling memory (34a) and at least a second sampling memory (34b) having a plurality of memory cells, the reception signal is evaluated to determine a reception point in time and, from that, the distance of the object by means of a light time of flight method,
**characterized in that** the first sampling memory (34a) and the second sampling memory (34b) have alternately partially overlapping recording regions and each record a reception signal for a longer duration than a time interval between two successive transmission light pulses (16) so that the first sampling memory (34a) records the reception signal beyond the transmission point in time of the subsequent transmission light pulse (16) in order to also detect late echoes from far objects while the second sampling memory (34b) already is active in order to detect early echoes from a near object by means of the new transmission light pulse.

11. The method according to claim 10,
wherein transmission light pulses (16) are transmitted repeatedly with a phase coding, and wherein first sampling memory (34a) and second sampling memory (34b) are alternately synchronized to the phase coding of successive transmission light pulses (16).

12. The method according to claim 10 or 11,
wherein a plurality of successive transmission light pulses (16) is transmitted, the reception signals recorded in the first sampling memory (34a) and the second memory (34b) are accumulated in a histogram, and the reception point in time is determined from the histogram.

13. The method according to claim 12,
wherein the reception signals are at least partially accumulated in the sampling memories (34a-b).

14. The method according to any of claims 10 to 13,
wherein the transmission light pulses (16) are periodically deflected in the monitoring area (20) by means of a movable deflection unit (18) in order to scan a larger monitoring area (20).

15. The method according to any of claims 10 to 14,
wherein an inadmissible intrusion into a protection field is detected within the monitoring area (20), and wherein in that case a safety-related shut down signal is output.

## Revendications

1. Capteur télémétrique optoélectronique (10) pour la détection et la détermination de la distance d'objets dans une zone à surveiller (20), qui comprend un émetteur de lumière (12) pour émettre une impulsion de lumière d'émission (16) dans la zone à surveiller (20), un récepteur de lumière (26) pour générer un signal de réception à partir de l'impulsion de lumière d'émission (22) réémise ou réfléchie par des objets dans la zone à surveiller (20), une première mémoire de balayage (34a) et au moins une seconde mémoire de balayage (34b) avec une multitude d'emplacements de stockage permettant chacun de stocker une portion du signal de réception, et une unité de commande et d'évaluation (32) réalisée pour déterminer à partir du signal de réception un instant de réception et à partir de celui-ci la distance de l'objet par une méthode de temps de vol de lumière,
**caractérisé en ce que**
la première mémoire de balayage (34a) et la seconde mémoire de balayage (34b) présentent des zones d'enregistrement alternantes partiellement chevauchantes et sont réalisées chacune pour enregistrer un signal de réception pendant une période temporelle plus longue qu'un intervalle de temps entre deux impulsions de lumière d'émission successives, de sorte que la première mémoire de balayage (34a) enregistre le signal de réception encore au-delà de l'instant d'émission de l'impulsion de lumière d'émission (16) successive, afin de détecter encore des échos tardifs d'objets très éloignés, alors que la seconde mémoire de balayage (34b) est déjà active pour détecter des échos précoces d'un objet à proximité par la nouvelle impulsion de lumière d'émission.

2. Capteur (10) selon la revendication 1,
dans lequel l'unité de commande et d'évaluation (32) est réalisée pour émettre les impulsions de lumière d'émission (16) à répétition avec un codage de phase, et la première mémoire de balayage (34a) et la seconde mémoire de balayage (34b) sont synchronisées différemment en correspondance du codage de phase d'impulsions de lumière d'émission (16) successives.

3. Capteur (10) selon la revendication 1 ou 2,
dans lequel l'unité de commande et d'évaluation (32) est réalisée pour émettre une multitude d'impulsions de lumière d'émission (16) successives, pour accumuler dans un histogramme les signaux de réception détectés dans la première mémoire de balayage (34a) et dans la seconde mémoire de balayage (34b), et pour déterminer l'instant de réception à partir de l'histogramme.

4. Capteur (10) selon la revendication 3,
dans lequel l'unité de commande et d'évaluation (32) est réalisée pour accumuler des signaux de réception dans les mémoires de balayage (34a-b).

5. Capteur (10) selon l'une des revendications précédentes,
dans lequel il est prévu au moins un convertisseur analogique-numérique (52) pour numériser des signaux de réception afin de les mémoriser dans les mémoires de balayage (34a-b).

6. Capteur (10) selon l'une des revendications précédentes,
dans lequel les mémoires de balayage (34a-b) et l'unité de commande et d'évaluation (32) sont implémentées sur un module logique (38) numérique commun, en particulier sur un FPGA.

7. Capteur (10) selon l'une des revendications précédentes,
dans lequel un filtre (48) est agencé en aval du récepteur de lumière (26), afin de convertir des impulsions de lumière d'émission (102) en un signal bipolaire (104).

8. Capteur (10) selon l'une des revendications précédentes,
qui est réalisé sous forme de scanneur laser pourvu d'une unité de déviation mobile (18) pour la déviation périodique des impulsions de lumière d'émission (16) dans la zone à surveiller (20).

9. Capteur (10) selon l'une des revendications précédentes,
qui comprend une sortie de sécurité (36) et l'unité de commande et d'évaluation (32) est réalisée pour reconnaître des interventions inadmissibles dans des champs de protection à l'intérieur de la zone à surveiller (20) et pour ensuite émettre à la sortie de sécurité (36) un signal de coupure relatif à la sécurité.

10. Procédé pour la détection et la détermination de la distance d'objets dans une zone à surveiller (20), dans lequel des impulsions de lumière d'émission (16) sont émises dans la zone à surveiller (20), un signal de réception respectif est généré à partir des impulsions de lumière d'émission (22) réémises ou réfléchies par des objets dans la zone à surveiller (20), une portion respective du signal de réception est mémorisée dans une première mémoire de balayage (34a) et dans au moins une seconde mémoire de balayage avec une multitude d'emplacements de stockage, et le signal de réception est évalué pour déterminer un instant de réception et à partir de celui-ci la distance de l'objet par une méthode de temps de vol de lumière, **caractérisé en ce que**
la première mémoire de balayage (34a) et la seconde mémoire de balayage (34b) présentent des zones d'enregistrement alternantes partiellement chevauchantes et enregistrent chacune un signal de réception pendant une période temporelle plus longue qu'un intervalle de temps entre deux impulsions de lumière d'émission successives, de sorte que la première mémoire de balayage (34a) enregistre le signal de réception encore au-delà de l'instant d'émission de l'impulsion de lumière d'émission (16) successive, afin de détecter encore des échos tardifs d'objets très éloignés, alors que la seconde mémoire de balayage (34b) est déjà active pour détecter des échos précoces d'un objet à proximité par la nouvelle impulsion de lumière d'émission.

11. Procédé selon la revendication 10,
dans lequel les impulsions de lumière d'émission (16) sont émises successivement avec un codage de phase, et la première mémoire de balayage (34a) et la seconde mémoire de balayage (34b) sont synchronisées en alternance au codage de phase d'impulsions de lumière d'émission (16) successives.

12. Procédé selon la revendication 10 ou 11,
dans lequel une multitude d'impulsions de lumière d'émission (16) successives sont émises, les signaux de réception détectés dans la première mémoire de balayage (34a) et dans la seconde mémoire de balayage (34b) sont accumulés dans un histogramme, et l'instant de réception est déterminé à partir de l'histogramme.

13. Procédé selon la revendication 12,
dans lequel les signaux de réception sont accumulés au moins partiellement dans les mémoires de balayage (34a-b).

14. Procédé selon l'une des revendications 10 à 13,
dans lequel les impulsions de lumière d'émission (16) sont déviées périodiquement dans la zone à surveiller (20) à l'aide d'une unité de déviation mobile (18), afin de balayer une zone à surveiller (20) agrandie.

15. Procédé selon l'une des revendications 10 à 14,
dans lequel des interventions inadmissibles dans des champs de protection à l'intérieur de la zone à surveiller (20) sont reconnues et ensuite un signal de coupure relatif à la sécurité est émis.
